# EUROPEAN PATENT APPLICATION

(11) **EP 4 848 151 A1**
(43) Date of publication of application: **02.12.2026**
(21) Application number: 26178925.9
(22) Date of filing: 15.05.2026
(51) Int. Cl.: G06N 3/098, G06N 3/02, G06N 20/00

(54) **INFORMATION PROCESSING SYSTEM, PROCESSING METHOD, STORAGE MEDIUM, AND COMPUTER PROGRAM PRODUCT**

(30) Priority: 29.05.2025 JP 2025089887
(71) Applicant: Canon Kabushiki Kaisha, Tokyo 146-8501 (JP)
(72) Inventor: YAMAMOTO, Shinji, Tokyo, 146-8501 (JP)
(74) Representative: Canon Europe Limited

(57) **Abstract**

An information processing system includes a plurality of client apparatuses and a training server, wherein each of the plurality of client apparatuses includes a local training unit to train a local model using image data, and a first communication unit to transmit a parameter of the local model and feedback information based on imaging information about the image data used for training the local model to the training server, wherein the training server includes a second communication unit to receive the parameter of the local model and the feedback information from each of the plurality of client apparatuses, a grouping unit to generate group information about the plurality of client apparatuses based on the feedback information, and a global training unit to generate a global model for each group of the plurality of client apparatuses based on the parameter of the local model and the group information.

## Description

### Technical Field

The present disclosure relates to an information processing system, a client apparatus, a training server, a processing method for the information processing system, a processing method for the client apparatus, a processing method for the training server, and a storage medium.

### BACKGROUND

In recent years, development of artificial intelligence (Al) using machine learning typified by deep learning has been actively carried out, and many apparatuses equipped with Al have been put into practical use. For Al installed in such an apparatus, it is important to continuously improve the functionality after the apparatus is provided to a user to enhance user convenience. In this regard, if images actually captured by the user with the apparatus and information input to the apparatus can be used for Al training, continuous improvement of the functionality can be achieved.

However, from the perspective of security and privacy protection, it becomes increasingly difficult to use user data directly for Al training. Thus, by providing an Al training unit in a user apparatus (hereinafter, referred to as a client apparatus), transmitting only a parameter of a trained model to a training server of an Al model provider (hereinafter, referred to as a training server), and integrating parameters on the training server, a federated learning mechanism can be used to construct a global model. In a case where federated learning is used, an image owned by the user and input information are not transmitted to a company, so that training can be performed using large amounts of data while taking security and privacy into consideration.

While the federated learning mechanism can provide a general-purpose model using data from all users, if users use the apparatus in different ways, it is difficult for Al to provide an optimum function on the client apparatus. Thus, a method referred to as personalized federated learning has also been proposed in which the global model is additionally trained on the client apparatus using data owned by the user.

Japanese Patent Laid-Open No. 2023-137116 describes a method for efficiently advancing training for each user by performing federated learning in a hierarchical structure in which users having a certain degree of similarity are grouped together.

However, in order to efficiently advance training for each user, it is necessary for the training server to manage similarity of each user, and for a company administrator to manually set the hierarchical structure and subgroups, resulting in a large setting burden for the company. For example, in a case of an apparatus having a relatively limited range of use, such as a monitoring camera, the hierarchical structure can be easily set based on an installation environment or the like. However, in a case of an apparatus, such as a digital camera, in which usage, a subject, an imaging location, and a preference for composition are different depending on the user, it is necessary to evaluate user similarity based on various factors and to set the hierarchical structure. Further, if usage of the apparatus changes due to a change in the user's lifestyle, it is necessary to reset the hierarchical structure.

### SUMMARY

The present disclosure in its first aspect provides an information processing system as specified in claim 1. Optional features are specified in claims 2 to 7.

The present disclosure in its second aspect provides a processing method as specified in claim 8. Optional features are specified in claims 9 to 14.

The present disclosure in its third aspect provides a processing method as specified in claim 15.

The present disclosure in its fourth aspect provides a computer program product as specified in claim 16.

According to the present disclosure, it is possible to reduce a load involved in training a local model.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating an example of a hardware configuration of an information processing apparatus.
Fig. 2 is a block diagram illustrating an example of a functional configuration of an information processing system.
Fig. 3 is a diagram illustrating an example of a digital camera that has an automatic imaging function using pan-tilt-zoom (PTZ).
Fig. 4 is a diagram illustrating an example of data to be stored in a local storage unit.
Fig. 5 is a diagram illustrating an example of generating a global model on a per-group basis.
Fig. 6 is a diagram illustrating an example in which imaging information is converted into frequency information.
Fig. 7 is a diagram illustrating an example of similarity between apparatuses calculated by a similarity calculation unit.
Figs. 8A and 8B are flowcharts each illustrating a processing method for the information processing system.

### DESCRIPTION OF THE EMBODIMENTS

Hereinafter, a desirable embodiment will be described in detail with reference to the accompanying drawings. The configuration described in the following embodiment is merely an example, and the present disclosure is not limited to the illustrated configuration.

In the present embodiment, a method is described in which information acquired by a client apparatus during imaging is used as feedback information, client apparatuses are grouped based on the feedback information, and an artificial intelligence (AI) model is trained.

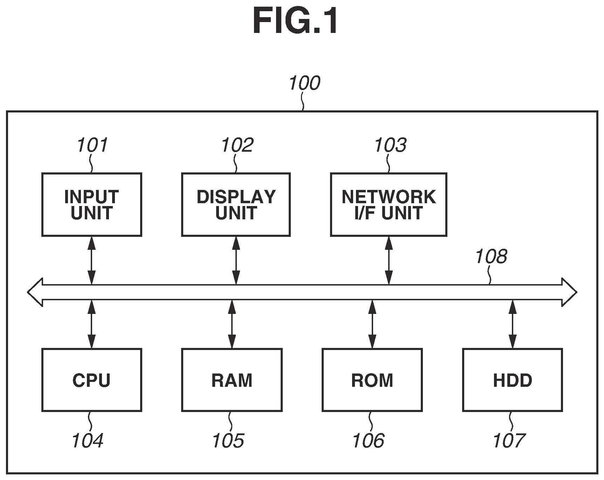

Fig. 1 is a diagram illustrating an example of a hardware configuration of an information processing apparatus 100.

The information processing apparatus 100 includes an input unit 101, a display unit 102, a network interface (I/F) unit 103, a central processing unit (CPU) 104, a random access memory (RAM) 105, a read-only memory (ROM) 106, a hard disk drive (HDD) 107, and a data bus 108.

The CPU 104 reads a computer program for control stored in the ROM 106 and loads the computer program into the RAM 105 to execute various types of control processing.

The RAM 105 is used as a temporary storage area for a program to be executed by the CPU 104, a working memory, and the like.

The network I/F unit 103 transmits and receives various information between the information processing apparatus 100 and another apparatus via the Internet.

The HDD 107 stores image data, a setting parameter, various programs, and the like. The image data and the like received from an external apparatus via the network I/F unit 103 is transmitted to and received by the CPU 104, the RAM 105, and the ROM 106 via the data bus 108.

The CPU 104 executes an image processing program stored in the ROM 106 or the HDD 107 to realize image processing and model training. Further, the HDD 107 receives data input from the external apparatus via the network I/F unit 103.

The input unit 101 is, for example, a keyboard, a mouse, a touch panel, or the like. The display unit 102 includes a display device, such as a liquid crystal display. The input unit 101 and the display unit 102 are also connected to the data bus 108.

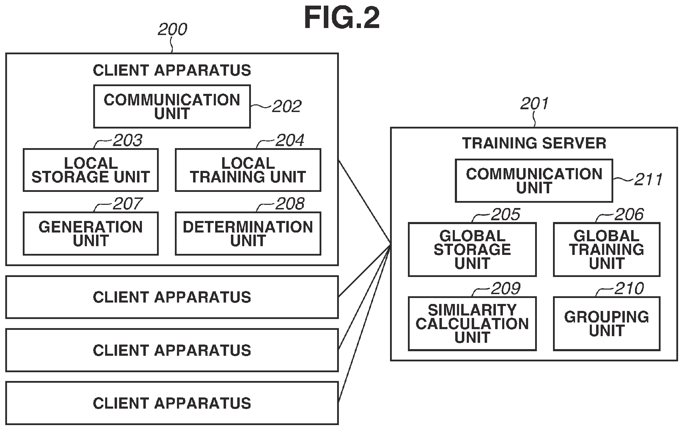

Fig. 2 is a block diagram illustrating an example of a functional configuration of an information processing system according to the present embodiment.

The information processing system includes a plurality of client apparatuses 200 and a training server 201.

The client apparatus 200 and the training server 201 each have the hardware configuration of the information processing apparatus 100 in Fig. 1. The client apparatus 200 and the training server 201 each realize the functional configuration illustrated in Fig. 2 by executing a program on the CPU 104 in Fig. 1.

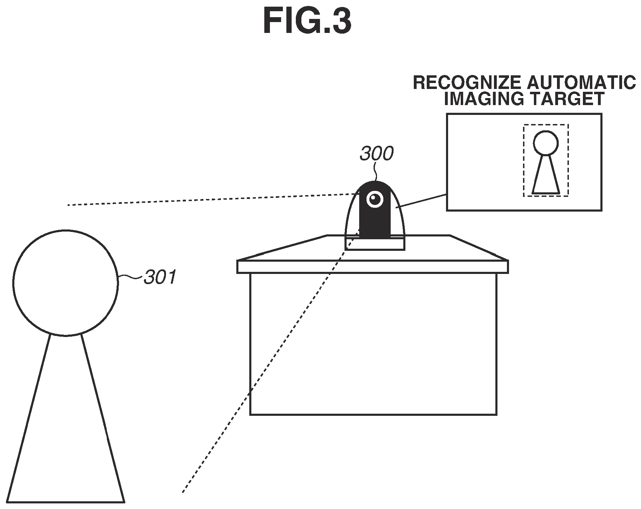

The client apparatus 200 is, for example, a smartphone, a tablet terminal, a digital camera, a security camera, a smart speaker, or various sensors. In the present embodiment, the client apparatus 200 is described using, as an example, a digital camera 300 illustrated in Fig. 3 that has an automatic imaging function using pan-tilt-zoom (PTZ). Fig. 3 is a diagram illustrating an example of the digital camera 300 having the automatic imaging function using PTZ. The digital camera 300 is capable of automatically controlling an angle of view and capturing an image when an imaging target 301 appears within an imaging range of the digital camera 300.

A plurality of client apparatuses 200 are connected to the training server 201 via a network. The information processing system includes communication units 202 and 211, a local storage unit 203, a local training unit 204, a global storage unit 205, a global training unit 206, a generation unit 207, a determination unit 208, a similarity calculation unit 209, and a grouping unit 210.

The client apparatus 200 includes the communication unit 202, the local storage unit 203, the local training unit 204, the generation unit 207, and the determination unit 208.

The training server 201 includes the communication unit 211, the global storage unit 205, the global training unit 206, the similarity calculation unit 209, and the grouping unit 210.

The communication units 202 and 211 exchange data between the client apparatus 200 and the training server 201. Here, the data to be transmitted and received include feedback information, apparatus usage information, and a parameter of a locally trained model that have been issued by the client apparatus 200, and group information and a parameter of a globally trained model that have been issued by the training server 201. The model parameter includes a model structure and a weight of the trained model. Contents of the feedback information, the apparatus usage information, and the group information are described below.

The local storage unit 203 stores image data captured by the client apparatus 200, imaging information about the image data, and user information. The image data may be an image captured using an imaging function of the client apparatus 200 itself or image information acquired by the client apparatus 200 from an external apparatus. The data is not limited to image data, and moving image data or audio data may be stored.

The imaging information mainly refers to camera setting information included in exchangeable image file format (EXIF) information. The EXIF information includes information about an imaging date and time and an apparatus used for imaging, and parameter information, such as a mode, exposure, International Organization for Standardization (ISO) sensitivity, and the like in imaging. The client apparatus 200 may independently acquire and store apparatus information. For example, information that is not included in the EXIF information but can be acquired from the client apparatus 200 may be stored, such as a lens zoom magnification, pan-tilt-zoom (PTZ) coordinates, a PTZ movement speed, camera installation position information, an automatic imaging target, and results of object detection, classification, and person identification that have been analyzed using an Al model as processing within a camera for camera imaging control. In other words, information that changes in each imaging, video recording, and audio recording is included in the imaging information.

The user information is information set by a user in using the client apparatus 200.

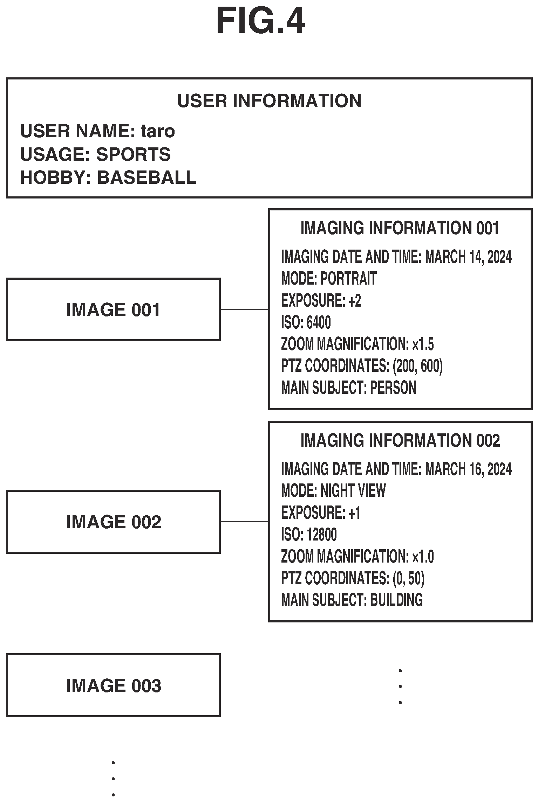

For example, the user information includes information about a user name and a usage. In other words, information that changes for each user of the client apparatus 200 is included in the user information. Fig. 4 is a diagram illustrating an example of data stored in the local storage unit 203.

The local training unit 204 trains an Al model using information stored in the local storage unit 203. In the present embodiment, the local training unit 204 trains an object detection model that detects a position of an object in an image. First, the local training unit 204 acquires the image data stored in the local storage unit 203. Then, the local training unit 204 requests the user to input Ground Truth (GT) information via the display unit 102. In this processing, the local training unit 204 may display results of object detection, classification, and person identification that have been analyzed using the Al model as processing within the camera to reduce time and effort required for GT input. Data about GT input by the user via the input unit 101 is aggregated, and training is performed using a network structure of the Al model that is set in advance. The GT information may be automatically attached based on information related to a user's imaging operation during imaging. For example, in a case where focus control or automatic tracking has been instructed via the touch panel or the like, a label may be attached to a touch position and used as GT. Model training can be performed using a method described in Joseph Redmon et al., "You Only Look Once: Unified, Real-Time Object Detection", CVPR 2016. The client apparatus 200 analyzes an image acquired from the camera using the trained model and realizes automatic autofocus (AF) and automatic imaging based on an analysis result.

The global storage unit 205 stores a parameter of a local model and feedback information acquired from each client apparatus 200, usage information about the client apparatus 200, and group information generated in the training server 201.

The global training unit 206 generates a global model of each group based on parameters of respective local models and group information stored in the global storage unit 205. First, the global training unit 206 acquires parameters of local models from the client apparatuses 200 for each group based on the group information and generates the global model by averaging the parameters of the local models.

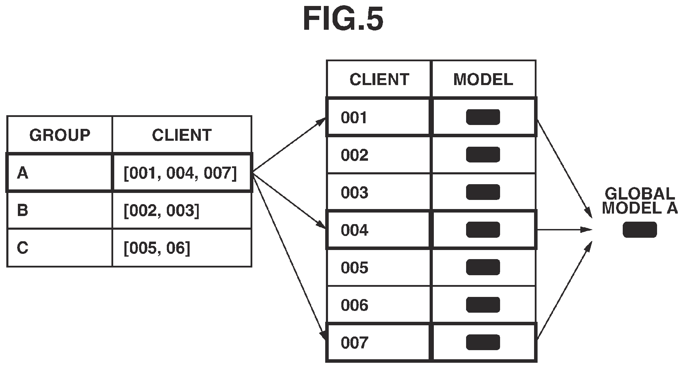

Fig. 5 is a diagram illustrating an example of generating a global model on a per-group basis. The group information includes a list of identifications (IDs) of the client apparatuses 200 that belong to each group. For example, Fig. 5 illustrates that clients 001, 004, and 007 belong to a group A. A group ID and a client ID only need to be uniquely identified and are not limited to a specific format. Client information includes the model parameter and the feedback information acquired for each client.

Then, the global training unit 206 acquires parameters of models associated with a client ID belonging to the group and generates the global model by averaging the parameters. In this processing, the global training unit 206 may generate the global model using model distillation instead of averaging the parameters. Distillation is a method in which a trained model is used as a teacher model, and information output by the teacher model is used as a target output. A model to be generated is used as a student model, and the student model is trained so that an output of the student model approaches the target output. In a general distillation method, one model is used as the teacher model, but a plurality of models may be used as teacher models, and target output may be randomly sampled from each model, or target output information may be an average of all of the models. The model distillation may be performed using a method described in Geoffrey Hinton et al., "Distilling the Knowledge in a Neural Network", NISP 2014.

The generation unit 207 generates the feedback information based on information stored in the local storage unit 203. The feedback information includes the user information and the imaging information. In this processing, the imaging information may be retained as information on a per-image basis, or may be converted into frequency information for each item of the imaging information and then used as the feedback information.

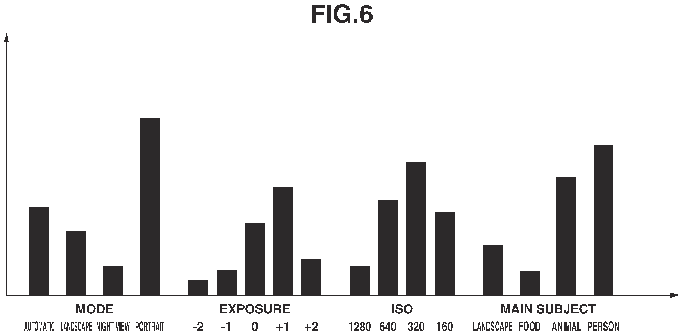

Fig. 6 is a diagram illustrating an example in which imaging information is converted into frequency information for each item. A horizontal axis represents items of the imaging information, and a vertical axis represents frequency of images captured under corresponding imaging conditions. The frequency of images can be calculated by dividing the number of images captured under the corresponding imaging conditions by the total number of images. The imaging information included in the feedback information may be filtered based on favorite registration information input by the user or download history information about an image downloaded to another terminal apparatus. In other words, it is sufficient that information about an image captured at a timing desired by the user among automatically captured images is included in the feedback information, and the filtering is not limited to a specific filtering item.

The determination unit 208 determines apparatus usage information based on the feedback information generated by the generation unit 207. The apparatus usage information may indicate a usage related to a subject, such as imaging a person, imaging a landscape, or imaging an animal, or may indicate content related to a category, such as sports, family, or food. The determination unit 208 calculates the apparatus usage information using a statistical method. A logistic regression method may be used as the statistical method. First, the determination unit 208 calculates a Mahalanobis distance from a distribution of feature quantities learned in advance for each usage, by using frequency information about each imaging item included in the feedback information as a feature vector. Further, the determination unit 208 calculates probability information from zero to one by applying logistic regression using the distance information as input. The determination unit 208 uses the probability information acquired for each usage as the apparatus usage information. The determination unit 208 may also determine the usage using a model trained, by deep learning, as a classification problem of the apparatus usage.

The similarity calculation unit 209 calculates similarity between client apparatuses 200, based on the feedback information generated by the generation unit 207 or the apparatus usage information determined by the determination unit 208. In a case where the similarity is calculated from the feedback information, the similarity calculation unit 209 uses frequency information for each imaging item included in the feedback information as a feature vector, and calculates similarity between feature vectors of respective client apparatuses 200 using a cosine similarity calculation method. In a case where the similarity is calculated based on the apparatus usage information, the similarity calculation unit 209 determines that the similarity is high in a case where a usage having the highest value in the apparatus usage information matches between the client apparatuses 200. In a case where the similarity is calculated as a numerical value, the similarity calculation unit 209 uses a predetermined value, such as 1 in a case where it is determined that the similarity is high, and 0 in a case where it is determined that the similarity is low. In a case where the similarity is calculated from the feedback information, the similarity calculation unit 209 may calculate a Bhattacharyya distance and determine that the similarity is higher as the Bhattacharyya distance is smaller. In other words, any calculation formula for calculating the similarity of the frequency information or the feature vector may be used, and the calculation formula is not limited to a specific formula. In a case where the similarity is calculated based on the apparatus usage information, the similarity calculation unit 209 may determine that the similarity is high in a case where probabilities for the same usage between the client apparatuses 200 are both a predetermined threshold or higher.

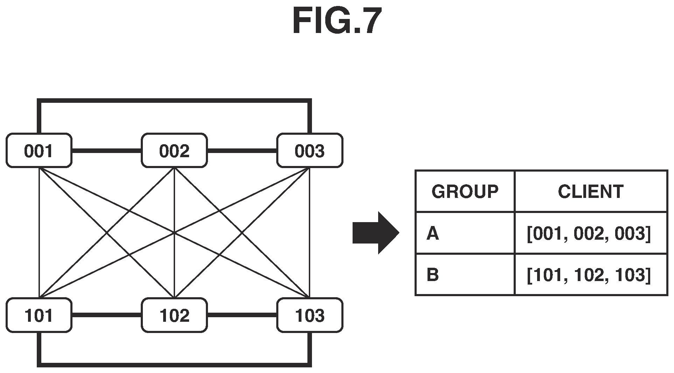

The grouping unit 210 generates group information about the client apparatuses 200 based on the similarity between the client apparatuses 200 calculated by the similarity calculation unit 209. Fig. 7 is a diagram illustrating an example of the similarity between the client apparatuses 200 calculated by the similarity calculation unit 209 and the group information. Nodes in the diagram represent respective client apparatuses 200 and indicate the similarity between the client apparatuses 200. Thickness of an edge represents a degree of the similarity, and the similarity is higher as the edge is thicker. The grouping unit 210 determines groups of the client apparatuses 200 by solving an optimization problem using the similarity between the client apparatuses 200. For example, the grouping unit 210 may solve the optimization problem by assigning a group so as to maximize a cost of the following equation. 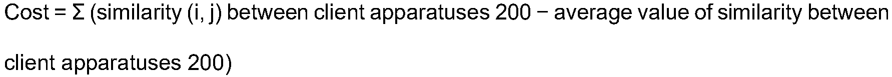 Cost = Σ (similarity (i, j) between client apparatuses 200 - average value of similarity between client apparatuses 200)

In this cost function, the similarity (i, j) between the client apparatuses 200 is set to zero in a case where the client apparatus 200i and the client apparatus 200j do not belong to the same group. The group information calculated by the grouping unit 210 needs to be determined in such a manner that client apparatuses 200 having high similarity belong to the same group, and the method is not limited to a specific optimization method.

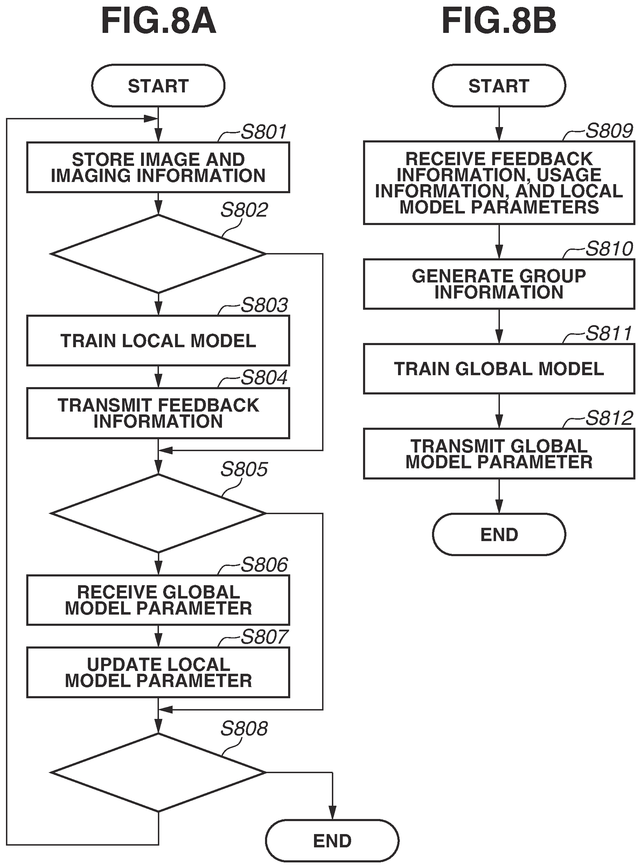

A processing method for the information processing system according to the present embodiment will be described with reference to flowcharts illustrated in Figs. 8A and 8B.

The flowchart illustrated in Fig. 8A is a sequence of processing that is executed by the client apparatus 200.

In step S801, the client apparatus 200 stores image data captured by the client apparatus 200, imaging information about the image data, and user information in the local storage unit 203.

The image data may be an image captured using an imaging function of the client apparatus 200 itself or image information acquired by the client apparatus 200 from an external apparatus. The data is not limited to image data, and moving image data or audio data may be stored.

The imaging information mainly refers to camera setting information included in EXIF information. The EXIF information includes information about an imaging date and time and an apparatus used for imaging, and parameter information, such as a mode, exposure, ISO sensitivity, and the like in imaging. The client apparatus 200 may independently acquire and store apparatus information. For example, information that is not included in the EXIF information but can be acquired from the client apparatus 200 may be stored, such as a lens zoom magnification, PTZ coordinates, a PTZ movement speed, camera installation position information, an automatic imaging target, and results of object detection, classification, and person identification that have been analyzed using an Al model as processing within the camera for camera imaging control. In other words, information that changes in each imaging, video recording, and audio recording is included in the imaging information.

The user information is information set by the user when the user has used the client apparatus 200.

For example, the user information includes information about the user name and a usage. In other words, information that changes for each user of the client apparatus 200 is included in the user information. Fig. 4 is a diagram illustrating an example of data stored in the local storage unit 203.

In step S802, in a case where the local model is to be trained, for example, in a case where a predetermined period of time has elapsed since a previous training date and time, the processing proceeds to step S803; otherwise, the processing proceeds to step S805.

In step S803, the client apparatus 200 causes the local training unit 204 to train the local model using the image data stored in the local storage unit 203.

The local training unit 204 trains the local model using the image data stored in the local storage unit 203. In the present embodiment, the local training unit 204 trains an object detection model that detects a position of an object in the image data. First, the local training unit 204 acquires the image data stored in the local storage unit 203. Then, the local training unit 204 requests the user to input Ground Truth (GT) information via the display unit 102. In this process, the local training unit 204 may display results of object detection, classification, and person identification analyzed using the local model as processing within the camera, to reduce time and effort required for GT input.

Data about GT input by the user via the input unit 101 is aggregated, and training is performed using a network structure of the local model that is set in advance. The GT information may be automatically attached based on information related to the user's imaging operation during imaging. For example, in a case where focus control or automatic tracking is instructed via the touch panel or the like, a label may be attached to a touch position and used as GT. Training of the local model can be performed using a method described in Joseph Redmon et al., "You Only Look Once: Unified, Real-Time Object Detection", CVPR 2016. The client apparatus 200 analyzes an image acquired from the camera using the trained local model and realizes automatic autofocus (AF) and automatic imaging based on the analysis result.

The local training unit 204 may control whether to use the image data for training, based on a download history or favorite registration information attached to the image data.

In step S804, the client apparatus 200 causes the generation unit 207 to generate feedback information based on the user information and the imaging information stored in the local storage unit 203, causes the determination unit 208 to generate usage information, and transmits the feedback information, the usage information, and a parameter of the local model to the training server 201.

The generation unit 207 generates the feedback information based on the information stored in the local storage unit 203. The feedback information includes the user information and the imaging information. In this processing, the imaging information may be retained as information on a per-image basis, or may be converted into frequency information for each item of the imaging information, as illustrated in Fig. 6, and then used as the feedback information.

For example, the feedback information includes at least one of the EXIF information, a camera parameter, a main subject type, an imaging angle of view, and camera user information.

The generation unit 207 may control whether to include the imaging information in the feedback information, based on a download history or favorite registration information attached to the image data.

The determination unit 208 determines the usage information about the client apparatus 200, based on the feedback information generated by the generation unit 207. The usage information about the client apparatus 200 may indicate a usage related to a subject, such as imaging a person, imaging a landscape, or imaging an animal, or may indicate content related to a category, such as sports, family, or food. The determination unit 208 calculates the usage information about the client apparatus 200 using a statistical method. A logistic regression method may be used as the statistical method. First, the determination unit 208 calculates a Mahalanobis distance from a distribution of feature quantities learned in advance for each usage, by using frequency information about each item of the imaging information included in the feedback information as a feature vector. Further, the determination unit 208 calculates probability information from zero to one by applying logistic regression using the distance information as input. The determination unit 208 uses the probability information acquired for each usage as the usage information. The determination unit 208 may also determine the usage using a model trained, by deep learning, as a classification problem of the apparatus usage.

The communication unit 202 of the client apparatus 200 is a first communication unit that transmits the feedback information, the usage information, and the parameter of the local model to the training server 201. Here, the feedback information is related to the image data used to train the local model.

In step S805, in a case where a global model is to be received, for example, in a case where a predetermined period of time has elapsed since a previous reception of the global model, the processing proceeds to step S806; otherwise, the processing proceeds to step S808.

In step S806, the client apparatus 200 receives a parameter of the global model from the training server 201 via the communication unit 202.

The communication unit 202 of the client apparatus 200 receives the parameter of the global model from the training server 201. In the present embodiment, the same communication unit is used to transmit the parameter of the local model and to receive the parameter of the global model, but separate communication units may be disposed.

In step S807, the client apparatus 200 causes the local training unit 204 to update the parameter of the local model using the parameter of the global model. The local training unit 204 updates the parameter of the local model using the parameter of the global model.

In step S808, in a case where the processing ends, for example, in a case where a power supply of the client apparatus 200 is turned off, the processing ends; otherwise, the processing returns to step S801.

The flowchart in Fig. 8B illustrates a procedure of processing that is executed by the training server 201.

This processing is intended to be executed not just once but periodically using a scheduler or the like.

In step S809, the training server 201 receives feedback information, usage information, and parameters of local models from all client apparatuses 200 under management of the training server 201, and stores the feedback information, the usage information, and the parameters of the local models in the global storage unit 205.

The communication unit 211 of the training server 201 is a second communication unit that receives the feedback information, the usage information, and a parameter of a local model from each of the plurality of client apparatuses 200.

In step S810, the training server 201 causes the similarity calculation unit 209 to calculate similarity between client apparatuses 200, based on the acquired feedback information and the acquired usage information, and causes the grouping unit 210 to generate group information using the similarity.

The similarity calculation unit 209 calculates similarity between the plurality of client apparatuses 200, based on the feedback information generated by the generation unit 207 or the usage information determined by the determination unit 208. In a case where the similarity is calculated from the feedback information, the similarity calculation unit 209 uses frequency information for each imaging item included in the feedback information as a feature vector, and calculates similarity between feature vectors of respective client apparatuses 200 using a cosine similarity calculation method. In a case where the similarity is calculated based on the usage information, the similarity calculation unit 209 determines that the similarity is high in a case where a usage having a highest value in the usage information matches between the client apparatuses 200. In a case where the similarity is calculated as a numerical value, the similarity calculation unit 209 uses a predetermined value, such as 1 in a case where it is determined that the similarity is high, and 0 in a case where it is determined that the similarity is low. In a case where the similarity is calculated from the feedback information, the similarity calculation unit 209 may calculate a Bhattacharyya distance and determine that the similarity is higher as the Bhattacharyya distance is smaller. In other words, any calculation formula for calculating the similarity of the frequency information or the feature vector may be used, and the calculation formula is not limited to a specific formula. In a case where the similarity is calculated based on the usage information, the similarity calculation unit 209 may determine that the similarity is high in a case where probabilities for the same usage between the client apparatuses 200 are both a predetermined threshold or higher.

The grouping unit 210 generates group information about the plurality of client apparatuses 200, based on the similarity between the plurality of client apparatuses 200 calculated by the similarity calculation unit 209. The nodes in the diagram in Fig. 7 represent respective client apparatuses 200 and indicate the similarity between the client apparatuses 200. Thickness of an edge represents a degree of the similarity, and the similarity is higher as the edge is thicker. The grouping unit 210 determines groups of the client apparatuses 200 by solving an optimization problem using the similarity between the client apparatuses 200.

In step S811, the training server 201 uses the generated group information and the parameters of the local models and causes the global training unit 206 to train a global model for each group of the plurality of client apparatuses 200.

The global training unit 206 generates (trains) the global model for each group of the plurality of client apparatuses 200, based on parameters of respective local models stored in the global storage unit 205 and the group information. First, as illustrated in Fig. 5, the global training unit 206 acquires parameters of local models from the client apparatuses 200 for each group, based on the group information, and generates the global model by averaging the parameters of the local models. In this process, the global training unit 206 may generate the global model using distillation of the local model instead of averaging the parameters of the local model. Distillation is a method in which a trained model is used as a teacher model, and information output by the teacher model is used as a target output. A model to be generated is used as a student model, and the student model is trained in such a manner that an output of the student model approaches the target output. In a general distillation method, one model is used as the teacher model, but a plurality of models may be used as teacher models, and target output may be randomly sampled from each model, or target output information may be an average of all of the models. The model distillation may be performed using a method described in Geoffrey Hinton et al., "Distilling the Knowledge in a Neural Network", NISP 2014.

In step S812, the training server 201 transmits a parameter of the global model trained for each group by the communication unit 202 to the client apparatuses 200 in a corresponding group.

The communication unit 211 of the training server 201 transmits the parameter of the global model for each group to the client apparatuses 200 in the corresponding group. In the present embodiment, the same communication unit is used to receive the parameter of the local model and to transmit the parameter of the global model, but separate communication units may be disposed.

As described above, according to the present embodiment, a subgroup that performs federated learning is automatically set and changed, and thus a load involved in training Al optimized for the user can be reduced. Even in a case where usage of an apparatus changes due to a change in the user's lifestyle, a setting of the subgroup can be appropriately changed.

Although embodiments have been described in detail above, the disclosed subject matter may be embodied, for example, as a system, an apparatus, a method, a program, or a recording medium (storage medium). Specifically, the disclosed subject matter may be applied to a system including a plurality of devices (e.g., a host computer, an interface device, an imaging apparatus, a web application, and the like), or may be applied to an apparatus including a single device.

It is to be understood that the object(s) of the present embodiment can also be achieved as follows. That is, a storage medium (recording medium) storing program code (computer program) of software for realizing the functions of the above-described embodiments is supplied to a system or an apparatus. The storage medium is, of course, a computer-readable storage medium. A computer (e.g., a CPU, an MPU, or the like) of the system or apparatus reads out and executes the program code stored in the storage medium. In this case, the program code itself read out from the storage medium realizes the functions of the above-described embodiments, and the storage medium storing the program code constitutes an aspect of the present embodiment.

The embodiments described above are merely specific examples for implementing the present disclosure, and should not be construed as limiting the technical scope of the present disclosure. That is, the present disclosure can be implemented in various forms without departing from the technical idea or the main features thereof.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

The following "clauses" form part of the description. The claims follow the description and are labelled accordingly.

### CLAUSES

1. An information processing system comprising:
   a plurality of client apparatuses; and
   a training server,
   wherein each of the plurality of client apparatuses includes
      local training means for training a local model using image data, and
      first communication means for transmitting a parameter of the local model and feedback information based on imaging information about the image data used for training the local model to the training server,
   wherein the training server includes
      second communication means for receiving the parameter of the local model and the feedback information from each of the plurality of client apparatuses,
      grouping means for generating group information about the plurality of client apparatuses based on the feedback information, and
      global training means for generating a global model for each group of the plurality of client apparatuses based on the parameter of the local model and the group information,
   wherein the second communication means transmits a parameter of the global model for each of the groups to a client apparatus in a corresponding group,
   wherein the first communication means receives the parameter of the global model from the training server, and
   wherein the local training means updates the parameter of the local model using the parameter of the global model.
2. The information processing system according to clause 1, wherein the feedback information includes user information.
3. The information processing system according to clause 1, wherein the feedback information includes frequency information for each item of the imaging information about the image data.
4. The information processing system according to clause 1, wherein the feedback information includes at least one of exchangeable image file format, EXIF, information, a camera parameter, a main subject type, an imaging angle of view, and camera user information that are about the image data.
5. The information processing system according to clause 1, wherein the local training means controls whether to use the image data for training, based on a download history or favorite registration information that is attached to the image data.
6. The information processing system according to clause 5, wherein each of the plurality of client apparatuses controls whether to include the imaging information in the feedback information, based on the download history or the favorite registration information that is attached to the image data.
7. The information processing system according to clause 1,
   wherein the training server further includes a similarity calculation means for calculating similarity between each of the plurality of client apparatuses based on the feedback information, and
   wherein the grouping means generates the group information about the plurality of client apparatuses based on the similarity.
8. A processing method for an information processing system including a plurality of client apparatuses and a training server, the processing method comprising:
   training, by each of the plurality of client apparatuses, as local training, a local model using image data; and
   transmitting, by each of the plurality of client apparatuses, as first communicating, a parameter of the local model and feedback information based on imaging information about the image data used for training the local model to the training server,
   receiving, by the training server, as second communicating, the parameter of the local model and the feedback information from each of the plurality of client apparatuses;
   generating, by the training server, as grouping, group information about the plurality of client apparatuses based on the feedback information;
   generating, by the training server, as global training, a global model for each group of the plurality of client apparatuses based on the parameter of the local model and the group information;
   transmitting, by the training server, as third communicating, a parameter of the global model for each of the groups to a client apparatus in a corresponding group;
   receiving, by each of the plurality of client apparatuses, as fourth communicating, the parameter of the global model from the training server; and
   updating, by each of the plurality of client apparatuses, the parameter of the local model using the parameter of the global model.
9. The processing method for the information processing system according to clause 8, wherein the feedback information includes user information.
10. The processing method for the information processing system according to clause 8, wherein the feedback information includes frequency information for each item of the imaging information about the image data.
11. The processing method for the information processing system according to clause 8, wherein the feedback information includes at least one of exchangeable image file format, EXIF, information, a camera parameter, a main subject type, an imaging angle of view, and camera user information that are about the image data.
12. The processing method for the information processing system according to clause 8, wherein the local training controls whether to use the image data for training, based on a download history or favorite registration information that is attached to the image data.
13. The processing method for the information processing system according to clause 12, wherein each of the plurality of client apparatuses controls whether to include the imaging information in the feedback information, based on the download history or the favorite registration information that is attached to the image data.
14. The processing method for the information processing system according to clause 8 further comprising:
   calculating, by the training server, as similarity calculating, similarity between each of the plurality of client apparatuses based on the feedback information,
   wherein the grouping generates the group information about the plurality of client apparatuses based on the similarity.
15. A non-transitory computer-readable storage medium storing a program that, when executed by a computer, causes the computer to perform the processing method according to any one of clauses 8 to 14.
16. A computer program product including a program that, when executed by a computer, causes the computer to perform the processing method according to any one of clauses 8 to 14.

## Claims

1. An information processing system comprising:
a plurality of client apparatuses (200); and
a training server (201),
wherein each of the plurality of client apparatuses includes
a local training unit (204) configured to train a local model using image data, and
a first communication unit (202) configured to transmit a parameter of the local model and feedback information based on imaging information about the image data used for training the local model to the training server,
wherein the training server includes
a second communication unit (211) configured to receive the parameter of the local model and the feedback information from each of the plurality of client apparatuses,
a grouping unit (210) configured to generate group information about the plurality of client apparatuses based on the feedback information, and
a global training unit (206) configured to generate a global model for each group of the plurality of client apparatuses based on the parameter of the local model and the group information,
wherein the second communication unit is configured to transmit a parameter of the global model for each of the groups to a client apparatus in a corresponding group,
wherein the first communication unit is configured to receive the parameter of the global model from the training server, and
wherein the local training unit is configured to update the parameter of the local model using the parameter of the global model.

2. The information processing system according to claim 1, wherein the feedback information includes user information.

3. The information processing system according to claim 1, wherein the feedback information includes frequency information for each item of the imaging information about the image data.

4. The information processing system according to claim 1, wherein the feedback information includes at least one of exchangeable image file format, EXIF, information, a camera parameter, a main subject type, an imaging angle of view, and camera user information that are about the image data.

5. The information processing system according to claim 1, wherein the local training unit (204) is configured to control whether to use the image data for training, based on a download history or favorite registration information that is attached to the image data.

6. The information processing system according to claim 5, wherein each of the plurality of client apparatuses is configured to control whether to include the imaging information in the feedback information, based on the download history or the favorite registration information that is attached to the image data.

7. The information processing system according to claim 1,
wherein the training server further includes a similarity calculation unit (209) configured to calculate a similarity between each of the plurality of client apparatuses based on the feedback information, and
wherein the grouping unit (210) is configured to generate the group information about the plurality of client apparatuses based on the similarity.

8. A processing method for an information processing system including a plurality of client apparatuses (200) and a training server (201), the processing method comprising:
training, by each of the plurality of client apparatuses, as local training, a local model using image data; and
transmitting, by each of the plurality of client apparatuses, as first communicating, a parameter of the local model and feedback information based on imaging information about the image data used for training the local model to the training server,
receiving, by the training server, as second communicating, the parameter of the local model and the feedback information from each of the plurality of client apparatuses;
generating, by the training server, as grouping, group information about the plurality of client apparatuses based on the feedback information;
generating, by the training server, as global training, a global model for each group of the plurality of client apparatuses based on the parameter of the local model and the group information;
transmitting, by the training server, as third communicating, a parameter of the global model for each of the groups to a client apparatus in a corresponding group;
receiving, by each of the plurality of client apparatuses, as fourth communicating, the parameter of the global model from the training server; and
updating, by each of the plurality of client apparatuses, the parameter of the local model using the parameter of the global model.

9. The processing method according to claim 8, wherein the feedback information includes user information.

10. The processing method according to claim 8, wherein the feedback information includes frequency information for each item of the imaging information about the image data.

11. The processing method according to claim 8, wherein the feedback information includes at least one of exchangeable image file format, EXIF, information, a camera parameter, a main subject type, an imaging angle of view, and camera user information that are about the image data.

12. The processing method according to claim 8, wherein the local training controls whether to use the image data for training, based on a download history or favorite registration information that is attached to the image data.

13. The processing method according to claim 12, wherein each of the plurality of client apparatuses controls whether to include the imaging information in the feedback information, based on the download history or the favorite registration information that is attached to the image data.

14. The processing method according to claim 8 further comprising:
calculating, by the training server, as similarity calculating, similarity between each of the plurality of client apparatuses based on the feedback information,
wherein the grouping generates the group information about the plurality of client apparatuses based on the similarity.

15. A non-transitory computer-readable storage medium storing a program that, when executed by a computer, causes the computer to perform the processing method according to any one of claims 8 to 14.

16. A computer program product including a program that, when executed by a computer, causes the computer to perform the processing method according to any one of claims 8 to 14.
